# DEMANDE DE BREVET EUROPEEN

(11) **EP 2 743 802 A1**
(43) Date de publication de la demande: **18.06.2014**
(21) Numéro de dépôt: 13195918.1
(22) Date de dépôt: 05.12.2013
(51) Int. Cl.: G06F 3/023, G06F 1/16, H04N 5/445, G06F 3/0488

(54) **Télécommande de type "tête haute" pour décodeur numérique ou téléviseur connecté**

(30) Priorité: 11.12.2012 FR 1261862
(71) Demandeur: Freebox SAS, 75016 Paris (FR)
(72) Inventeur: Pouillon, Nicolas, 75013 PARIS (FR)
(74) Mandataire: Dupuis-Latour, Dominique

(57) **Abrégé**

Un appareil déporté (20) comprend une surface tactile (22) avec une pluralité de zones (26) formant touches de clavier (24). Il comprend également des moyens de détection de contact ou de proximité d'au moins un doigt (30, 30') avec la surface tactile (22), produisant une information de position d'une zone mobile de présence de doigt (28, 28'), correspondant à la position de ce doigt par rapport à la configuration de clavier (24). Un équipement principal (10) comporte un générateur de caractères, des moyens de recopie de clavier affichant sur un écran (16) une représentation d'un clavier image (34), et des moyens de suivi de doigt affichant sur l'écran une représentation (38, 38') de la position de la zone mobile de présence de doigt (28, 28'), en superposition du clavier image (34) et en correspondance avec la position du doigt par rapport à la configuration de clavier (24) de l'appareil déporté.

## Description

L'invention concerne la saisie de caractères sur un clavier de type surface tactile, disjoint de l'équipement recevant et traitant les caractères saisis.

L'invention concerne en particulier le cas, non limitatif, des équipements formés par une *set-top box* ou boitier décodeur de fournisseur d'accès Internet, en association avec un téléviseur permettant d'afficher diverses informations.

Un exemple d'équipement de ce type est le boitier distribué par l'opérateur *Free,* Paris, France sous la dénomination *Freebox Player ou Freebox HD.* Ce boitier intègre décodeur, serveur domestique, etc. Il assure notamment le décodage des différents signaux du flux video, qui pourront être visionnés sur le téléviseur sur lequel il est branché. Il est par ailleurs couplé à un boitier réseau disposé à proximité de la prise téléphonique d'abonné de l'utilisateur, qui assure les fonctions d'interfaçage ADSL ou FTTH, de modem de téléphonie sur IP, de routeur sans fil Wi-Fi, etc.

Ces différentes fonctions peuvent être également intégrées à un équipement unique de type "téléviseur connecté" (ou encore "téléviseur Internet" ou "IP TV") qui dispose de sa propre interface IP permettant de la connecter directement au réseau IP de l'abonné, sans interposition de boitier décodeur séparé.

À la différence des systèmes informatiques, ces équipements n'incluent pas de clavier, de sorte que leur commande et leur paramétrage nécessitent l'utilisation d'un appareil déporté de type télécommande ou analogue, notamment pour saisir des caractères dès qu'il est nécessaire d'introduire dans l'équipement des données alphanumériques telles qu'identifiant, mot de passe, adresse de page web à afficher, mot tapé dans un champ de recherche, etc.

Ces appareils déportés incorporant un clavier peuvent notamment être dotés d'une surface tactile. Il peut s'agir d'un accessoire dédié (de type télécommande affectée au décodeur ou au téléviseur connecté), ou bien d'un téléphone mobile ou assistant numérique personnel pourvu d'une fonction de télécommande.

Dans les deux cas, les claviers sont généralement si compacts qu'il n'est pas pratique de les utiliser avec les dix doigts de la main, mais seulement avec les pouces. Enfin, les surfaces tactiles concernées sont souvent strictement planes, n'offrant au toucher aucun retour physique lors de l'activation des touches ni aucun repère de positionnement des doigts.

Ces claviers se distinguent donc de ceux utilisés dans les systèmes informatiques, où l'écart entre touches est normalisé et calqué pour des raisons ergonomiques sur l'écart moyen entre les doigts d'une main. Ces claviers informatiques disposent également de marques physiques sur les touches, avec des reliefs pour les deux touches correspondant aux index de la main. Les utilisateurs, habitués à la disposition des claviers, connaissent donc l'emplacement des touches et peuvent taper en gardant la tête haute, le regard porté sur le texte tapé à l'écran.

À l'opposé, avec un clavier de type télécommande déportée, s'il est pratique de taper un texte en utilisant les seuls pouces, il est en revanche beaucoup plus difficile de retenir à l'aveugle la position des doigts sur le clavier.

Dans le cas d'un téléphone mobile ou autre assistant numérique personnel doté d'un écran de visualisation, la petite taille de l'appareil fait que le champ de vision englobe non seulement la zone de l'écran où le texte est affiché, mais également la partie où se présente le clavier : grâce à cette proximité, il n'est pas nécessaire de savoir retrouver intuitivement les touches du clavier sans les regarder, la vue pouvant passer sans effort du clavier à la zone de saisie où est affiché le texte tapé, et inversement, de sorte que l'utilisateur peut compenser les imprécisions de sa frappe sans même y réfléchir.

En revanche, avec un appareil de type télécommande, dépourvu d'écran et donc de retour visuel du texte tapé, l'affichage du texte saisi ne se situe pas dans le même champ de vision que le clavier : le texte saisi est affiché sur un écran prévu pour être vu de loin (l'écran du téléviseur, situé à quelques mètres), tandis que le clavier se trouve dans les mains de l'utilisateur dans une direction différente et dans un espace très restreint, de quelques centimètres. L'utilisateur doit alors adapter constamment sa vue pour passer de l'écran au clavier en changeant la direction de son regard et en modifiant son accommodation, ce qui constitue une difficulté majeure du point de vue de l'ergonomie de ce genre de configuration.

Tel est le problème de l'invention, dont le but est de trouver un moyen de permettre la saisie rapide et précise d'un texte par l'utilisateur, celui-ci gardant la vue fixée sur l'écran du téléviseur plutôt que sur le clavier de la télécommande.

Le WO01/78054 A1 décrit un système de télécommande avec un pavé tactile réagissant à la position des doigts de l'utilisateur. Pour pouvoir naviguer sur Internet et taper du texte, le système affiche sur l'écran un clavier virtuel dont la surface est une transposition (*mapping*) de la surface du pavé tactile. Lorsque l'utilisateur touche d'un doigt le pavé tactile pour sélectionner une lettre ou un chiffre sur le clavier, cette lettre ou ce chiffre est affiché de manière accentuée sur le clavier virtuel présenté sur l'écran. Lorsqu'il a atteint la lettre ou le chiffre qu'il souhaite, l'utilisateur appuie sur un bouton de la télécommande pour valider la sélection de cette lettre ou de ce chiffre.

Cette technique permet à l'utilisateur de garder les yeux sur l'écran, mais l'oblige toutefois à tâtonner en parcourant le clavier jusqu'à trouver la lettre ou le chiffre souhaités. Il ne dispose en effet comme "feedback", c'est-à-dire comme information de retour visuel, que l'accentuation de l'affichage du caractère du clavier potentiellement sélectionnable, cette sélection devant en tout état de cause être validée, caractère par caractère, par appui sur un bouton spécifique de la télécommande. Ceci impose en outre une coordination entre deux doigts, l'un sur le pavé tactile (pour trouver la lettre ou le chiffre à sélectionner) et l'autre sur le bouton de sélection (pour valider le choix).

Le WO 01/33838 A1, quant à lui, décrit une télécommande avec un pavé tactile sur lequel sont présentés tous les caractères d'un clavier, mais ceci implique des allers-retours permanents du regard de l'utilisateur entre le clavier de la télécommande et l'écran du téléviseur, dans une direction différente et avec une accommodation différente.

Le but de l'invention est de proposer un nouveau système procurant une ergonomie améliorée par rapport à ces dispositifs connus.

Essentiellement, l'invention propose, pour que l'utilisateur puisse garder les yeux sur l'écran tout en voyant la position des points de contact de ses doigts sur le clavier, d'afficher un clavier virtuel sur l'écran du téléviseur avec en surimpression les zones exactes d'appui des doigts, par exemple par la présentation sur l'écran de taches colorées correspondant à la position des doigts sur le clavier de la télécommande, ces taches étant mobiles en même temps et de la même façon que les déplacements des doigts.

L'utilisateur peut ainsi saisir son texte "tête haute" en repérant la position relative exacte de ses doigts par rapport aux touches du clavier, sans avoir à déplacer son regard incessamment entre l'écran et le clavier et sans devoir accommoder sa vision sur des distances différentes.

Une saisie à deux doigts est tout à fait possible, de la même manière que par exemple la saisie à deux pouces de messages sur les claviers des téléphones mobiles.

Plus précisément, l'invention propose un ensemble du type général divulgué par le WO01/78054 A1 précité, comprenant les éléments énoncés dans le préambule de la revendication 1.

La présente invention est remarquable en ce qu'elle comprend, pour atteindre les buts indiqués plus haut, les éléments énoncés dans la partie caractérisante de la revendication 1.

Les sous-revendications visent diverses formes de mise en oeuvre particulières, avantageuses.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 illustre de façon générale un ensemble selon l'invention, comprenant l'équipement principal pourvu d'un écran et l'appareil déporté de télécommande et de saisie du texte.
La Figure 2 est un organigramme schématique montrant l'enchainement des différentes opérations mises en oeuvre par la technique de l'invention.

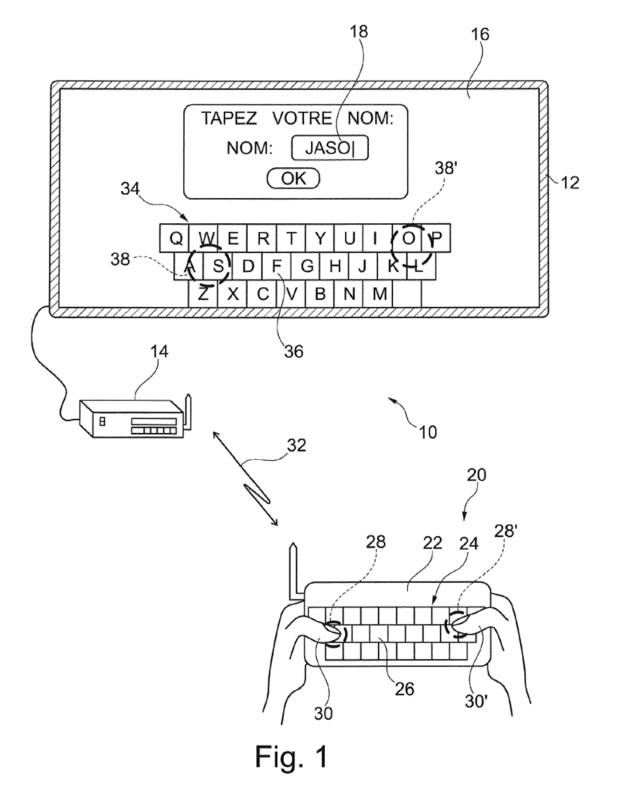

Sur la Figure 1, la référence 10 désigne l'équipement principal, comprenant par exemple un téléviseur 12 relié à un boitier décodeur séparé 14. Un exemple de tel boitier est l'équipement distribué par l'opérateur *Free,* Paris, France sous la dénomination *Freebox HD* ou *Freebox Player :* un tel boitier intègre décodeur video, disque dur, magnétoscope numérique, et des logiciels d'affichage graphique sur le téléviseur et de réception et de traitement de commandes envoyées par un utilisateur via une télécommande distante.

Le téléviseur 12 comporte un écran 16 sur lequel peut être notamment affichée une zone de saisie 18 reproduisant les caractères tapés par un utilisateur au moyen d'une télécommande distante.

Cette télécommande distante est constituée d'un appareil déporté tel que celui illustré en 20, comprenant une surface tactile 22 présentant une configuration de clavier 24 rassemblant les diverses touches 26 d'un clavier alphabétique ou alphanumérique conventionnel.

L'appareil déporté 20 peut être par exemple un boitier de télécommande dont le recto comprend les boutons conventionnels propres à un tel objet (volume sonore, changement de programme, marche/arrêt, sélections diverses, etc.) et le verso porte la surface tactile 22.

Cette surface tactile 22 portant la configuration de clavier 24 est destinée à être utilisée en "mode paysage" avec deux pouces 30, 30' déplacés sur la configuration de clavier 24.

De façon caractéristique, l'appareil déporté 20 comprend des moyens pour déterminer la position 28, 28' des pouces 30, 30' sur la surface tactile 22 pendant toute la durée du déplacement de ces pouces sur cette surface ou au-dessus de celle-ci (la détection peut être une détection de contact ou bien de proximité). Ces informations de position des pouces, c'est-à-dire de position des zones 28, 28' sur la surface tactile 22, sont transmises au décodeur 14 via une liaison sans fil 32.

Le décodeur 14 génère sur l'écran 16 du téléviseur 12 un affichage comprenant :
- d'une part, une représentation de clavier 34, qui est une image de la configuration de clavier 24 de l'appareil déporté 20, avec les différentes touches 36 correspondant aux touches 26 disposées de la même façon, et
- d'autre part, en superposition sur cette représentation de clavier 34, des zones mobiles 38, 38' homologues des zones 28, 28' correspondant à la position des pouces 30, 30' sur la surface tactile 22 de l'appareil déporté 20.

Les zones 38, 38' peuvent être présentées en superposition du clavier fixe 34 de diverses façons, par exemple par des contours ou par des zones colorées.

Ainsi, l'utilisateur qui regarde l'écran 16 verra s'afficher à la fois la représentation 34 du clavier sur lequel il tape et la position 38, 38' de ses pouces en déplacement sur ce même clavier, et ceci sans avoir besoin de regarder le clavier de l'appareil qu'il tient entre ses mains.

L'utilisateur est alors capable de déterminer l'endroit exact de la position de ses pouces et du caractère frappé (obtenu par un appui plus marqué sur la surface tactile à l'endroit du caractère choisi), sans quitter l'écran 16 du téléviseur des yeux. Sa vue se déplacera simplement entre la zone de saisie de texte 18 et l'image 34 du clavier toutes deux affichées sur l'écran 16, donc avec un très faible déplacement de l'angle de vision et sans changement de la distance d'accommodation.

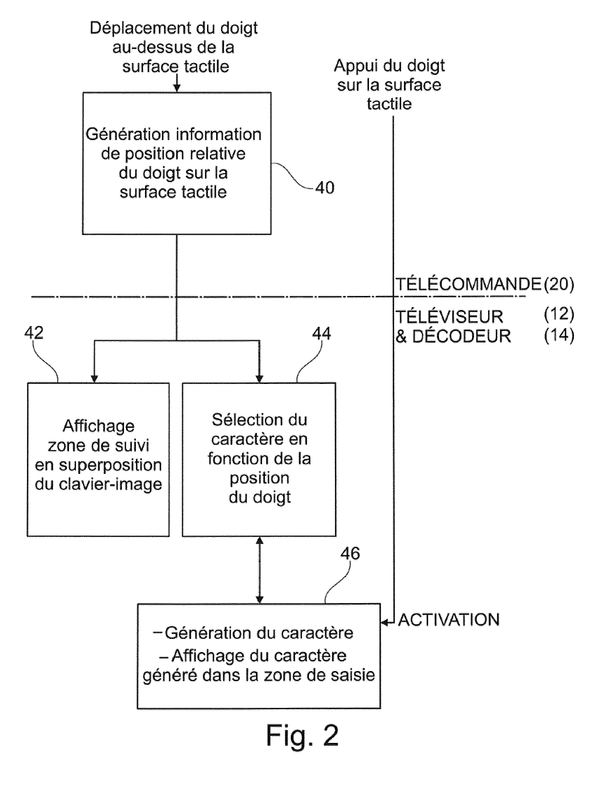

La Figure 2 illustre l'enchainement des différentes étapes de cette technique de saisie selon l'invention.

Comme illustré par le bloc 40, le déplacement d'un doigt (ou des deux doigts, typiquement les deux pouces 30, 30') sur la surface tactile 22 ou juste au-dessus de celle-ci va générer en permanence une information de position du doigt sur cette surface, correspondant aux zones mobiles 28, 28', cette position (ou ces deux positions) étant actualisée(s) en permanence.

Après transmission au décodeur 14, celui-ci pilote le téléviseur 12 de manière à afficher sur l'écran 16 en 38, 38' des zones de suivi correspondant à la position des pouces, en superposition de l'image fixe du clavier 34 (bloc 42).

L'utilisateur peut alors sélectionner le caractère à taper par un appui plus marqué sur la surface tactile, ce qui aura pour effet d'activer un générateur de caractères d'un logiciel applicatif intégré au décodeur 14, le caractère étant sélectionné en fonction de la position, connue, du doigt sur la surface tactile 22 (blocs 44, 46). Le caractère généré est affiché dans la zone de saisie 18. Par "générateur de caractères", on entendra un ensemble logiciel et/ou matériel interprétant la position des doigts sur la surface tactile associée à une configuration de clavier pour en produire un ou plusieurs caractères.

On notera que la technique proposée par l'invention est principalement mise en oeuvre dans le décodeur 14 (ou dans le microcontrôleur du téléviseur, dans le cas d'un téléviseur connecté). La seule fonction spécifique requise dans l'appareil déporté 20 est la détection de la position du doigt sur la surface tactile et la transmission de cette information au décodeur. De ce fait, l'appareil déporté 20 ne met en oeuvre aucun traitement complexe, il ne contient pas non plus de générateur de caractères et ne nécessite aucun afficheur.

Il est possible ainsi de réaliser un appareil à très bon compte, par exemple en prévoyant au dos d'une télécommande conventionnelle une surface tactile lisse (pas de retour tactile à la manière d'un clavier), dépourvue d'affichage.

Sur cette surface tactile, il est possible de prévoir sur chaque touche 26 un caractère sérigraphié, mais ceci n'est pas nécessaire dans la mesure où l'on ne demande pas à l'utilisateur de regarder ce clavier : la configuration de clavier 24 proprement dite peut être constituée, comme illustré sur la Figure 1, d'un simple quadrillage (clavier muet) ou même être dépourvue de tout élément graphique, dès lors qu'il n'est pas nécessaire ni même utile que l'utilisateur regarde la surface tactile pour utiliser l'appareil.

L'utilisation d'un clavier muet présente également la possibilité de disposer de plusieurs claviers différents sélectionnables par un simple appui sur une touche : divers claviers internationaux, clavier de symboles et/ou clavier numérique, sélection d"'émoticônes" ou *smileys,* etc., la génération de caractères multiples étant gérée au sein du décodeur 14, indépendamment de l'appareil déporté 20, qui présentera à l'utilisateur le clavier virtuel sélectionné, en temps réel sur l'écran 16 du téléviseur 12.

## Revendications

1. Un ensemble comprenant :
- un équipement principal (10), comportant :
· des moyens de traitement de données (50) opérant à partir de caractères saisis sur un clavier par un utilisateur ;
· un écran de visualisation (16), apte à afficher les caractères saisis ;
· des moyens pour afficher sur l'écran une représentation d'un clavier image (34), ce clavier image comportant pour chaque zone d'une pluralité de zones formant touches (36) un marquage du caractère associé à cette zone ; et
· un générateur de caractères (46), pilotable sélectivement par des informations, reçues d'un appareil déporté, de position d'un doigt de l'utilisateur sur une surface tactile de cet appareil déporté, et
- ledit appareil déporté (20), comportant :
· ladite surface tactile (22) ;
· des moyens (40) de détection de contact ou de proximité d'au moins un doigt (30, 30') de l'utilisateur avec la surface tactile (22), aptes à produire lesdites informations de position du doigt sur la surface tactile ; et
· des moyens émetteurs (32), pour la télétransmission à l'équipement principal desdites informations de position du doigt,
**caractérisé en ce que** :
- l'équipement principal (10) comporte des moyens (42) pour afficher sur l'écran, en superposition du clavier image (34), au moins une représentation (38, 38') de la position d'une zone mobile de présence de doigt(s) (28, 28') correspondant à la position courante du (des) doigt(s) de l'utilisateur sur la surface tactile de l'appareil déporté, et
- ladite surface tactile (22) est activable sous l'effet d'un appui d'un doigt de l'utilisateur, les moyens émetteurs opérant également la télétransmission à l'équipement principal d'une information correspondante pour activer alors le générateur de caractères de l'équipement principal afin qu'il génère un caractère fonction des coordonnées du point d'appui du doigt sur la surface tactile au moment de l'activation.

2. L'ensemble de la revendication 1, dans lequel l'appareil déporté (20) est dépourvu de générateur de caractères.

3. L'ensemble de la revendication 1, dans lequel l'appareil déporté (20) est dépourvu de marquages de caractères sur les zones formant touches (26) de la configuration de clavier.

4. L'ensemble de la revendication 1, dans lequel l'appareil déporté (20) comprend un quadrillage de clavier délimitant sur la surface tactile la position des touches (26) de la configuration de clavier.

5. L'ensemble de la revendication 4, dans lequel le quadrillage de clavier est un quadrillage de clavier muet.

6. L'ensemble de la revendication 1, dans lequel l'appareil déporté (20) est dépourvu de moyens afficheurs.

7. L'ensemble de la revendication 1, dans lequel l'appareil déporté (20) est une télécommande de contrôle de l'équipement principal (10).
